# EUROPEAN PATENT APPLICATION

(11) **EP 2 738 836 A1**
(43) Date of publication of application: **04.06.2014**
(21) Application number: 12793524.5
(22) Date of filing: 25.05.2012
(51) Int. Cl.: H01M 2/12

(54) **RECTANGULAR BATTERY**

(30) Priority: 31.05.2011 JP 2011122732
(71) Applicant: Hitachi Vehicle Energy, Ltd., Hitachinaka-shi, Ibaraki 312-8505 (JP)
(72) Inventor: URANO, Kazuaki, Hitachinaka-shi Ibaraki 312-8505 (JP); IWASA, Masaaki, Hitachinaka-shi Ibaraki 312-8505 (JP); TSUNAKI, Takuro, Hitachinaka-shi Ibaraki 312-8505 (JP)
(74) Representative: Beetz & Partner
(86) International application number: PCT/JP2012/063512
(87) International publication number: WO 2012/165338

(57) **Abstract**

A safety valve 13 is integrally formed in a battery lid 3 together with a peripheral wall portion 14 by press and the like. The safety valve 13 is formed in contact with the peripheral wall portion 14, at the bottom portion of the depressed portion 18 depressed from the upper surface 12a of the base portion 12 of the battery lid 3. The upper surface 13a of the safety valve 13 is located below the lower surface of the base portion 12. When pressing force X parallel to the upper surface 13a of the battery lid 3 is exerted on the inner peripheral surface 14a of the peripheral wall portion 14 while the connection tube and the like is connected, the pressing force X can be supported by the entire thickness (plate thickness) T of the base portion 12.

## Description

### Technical Field

The present invention relates to a prismatic storage battery, and more particularly, to a prismatic storage battery having a safety valve.

### Background Art

When a prismatic storage battery such as a lithium secondary battery is overcharged, electrolyte may be dissolved and gas may be generated, which may increase the internal pressure of the battery. Usually, a safety valve is provided that opens to discharge the gas when the internal pressure of the battery increases as the gas is generated, so as to ensure the safety of the prismatic storage battery. For example, the safety valve is integrally formed with a lid that is attached to close an opening portion of a battery case by press work and the like.

The lid is a substantially flat-shaped plate-like member, but the safety valve is formed to be thinner than a peripheral portion, so that the lid breaks and opens when the internal pressure of the battery attains a predetermined value. Therefore, the safety valve is weaker than other portions in terms of rigidity.

A storage battery module used in, for example, an electric vehicle by connecting multiple prismatic storage batteries in series is provided with a discharge duct for discharge gas, which is discharged from the safety valve, to the outside. The discharge duct is attached to the periphery of the safety valve of each storage battery, so that the upper portion of the safety valve is sealed from the outside.

As described above, the safety valve is weak in terms of rigidity, and therefore, in a step of, for example, attaching the lid to the battery case, the safety valve receive the effect of the force, and the safety valve is likely to become defective, for example, get twisted. Therefore, a prismatic storage battery is known, which is structured to be formed with a ring-shaped rib portion protruding from the upper surface of the lid in a direction opposite to the battery case when the safety valve is integrally formed with the lid, and the safety valve is provided at the external peripheral side of the rib portion (for example, see PTL 1).

### Citation List

### Patent Literature

PTL 1: Japanese Patent Application Laid-Open No. 2005-332700

### Summary of Invention

### Technical Problem

In the invention described in PTL 1, the safety valve is formed at the inner peripheral side of the rib portion that is protruding from the upper surface of the lid in the direction opposite to the battery case. When the discharge duct for discharging gas is coupled with the safety valve having such structure, a connection tube is attached to the external periphery or the inner periphery of the rib portion, and the upper portion of the safety valve and the discharge duct are connected, which is the most simple and efficient attachment structure.

However, in the structure in which the rib portion protruding from the upper surface of the lid is integrally formed with the lid, it is difficult to ensure sufficient level of rigidity of the rib portion in view of the duct attachment structure.

### Solution to Problem

A prismatic storage battery of the present invention includes: an electric power generation element formed by laminating a positive electrode and a negative electrode with a separator interposed therebetween; and a battery container in which the electric power generation element is accommodated and in which an electrolyte is injected, wherein the battery container is formed as a sealed structure with a battery case and a lid member, the lid member is integrally formed with a base portion having a predetermined thickness having an upper surface and a lower surface, a peripheral wall portion forming a depressed portion depressed from the upper surface of the base portion, and a safety valve having a peripheral edge portion provided in contact with the peripheral wall portion, wherein at least an upper surface of the peripheral edge portion of the safety valve is located below the lower surface of the base portion.

### Advantageous Effects of Invention

According to a prismatic storage battery of this invention, the upper surface of the peripheral edge portion of the safety valve is located below the lower surface of the base portion, and the pressing force X parallel to the upper surface of the battery lid can be supported by the entire surface of the peripheral wall portion corresponding to the thickness of the base portion of the inner peripheral surface. Therefore, the rigidity of the base portion 12 against the pressing force X can be increased.

### Brief Description of Drawings

[FIG. 1] FIG. 1 is an external appearance perspective view illustrating an embodiment of a prismatic storage battery according to the present invention.
[FIG. 2] FIG. 2 is an exploded perspective view illustrating a prismatic storage battery as illustrated in FIG. 1.
[FIG. 3] FIG. 3 is a perspective view illustrating a state where a part of an electrode group as illustrated in FIG. 1 is extracted.
[FIG. 4] FIG. 4 is an enlarged perspective view taken along line IV-IV of a battery lid 3 as illustrated in FIG. 1
[FIG. 5] FIG. 5 is a cross sectional view illustrating an attachment structure of a battery lid and a duct.
[FIGS. 6(a) and 6(b)] FIGS. 6(a) and 6(b) are cross sectional views illustrating a method for forming a safety valve.
[FIG. 7] FIG. 7 is a cross sectional view illustrating an attachment structure of a battery lid and a duct according to a second embodiment of the present invention.
[FIG. 8] FIG. 8 is a cross sectional view illustrating an attachment structure of a battery lid and a duct according to a third embodiment of the present invention.
[FIG. 9] FIG. 9 is a cross sectional view illustrating an attachment structure of a battery lid and a duct according to a fourth embodiment of the present invention.
[FIG. 10] FIG. 10 is a cross sectional view illustrating an attachment structure of a battery lid and a duct according to a fifth embodiment of the present invention.

### Description of Embodiments

### (First embodiment)

### [Entire structure of prismatic storage battery]

Hereinafter, a prismatic storage battery according to this invention will be explained as an embodiment of a lithium-ion prismatic secondary battery with reference to drawings.

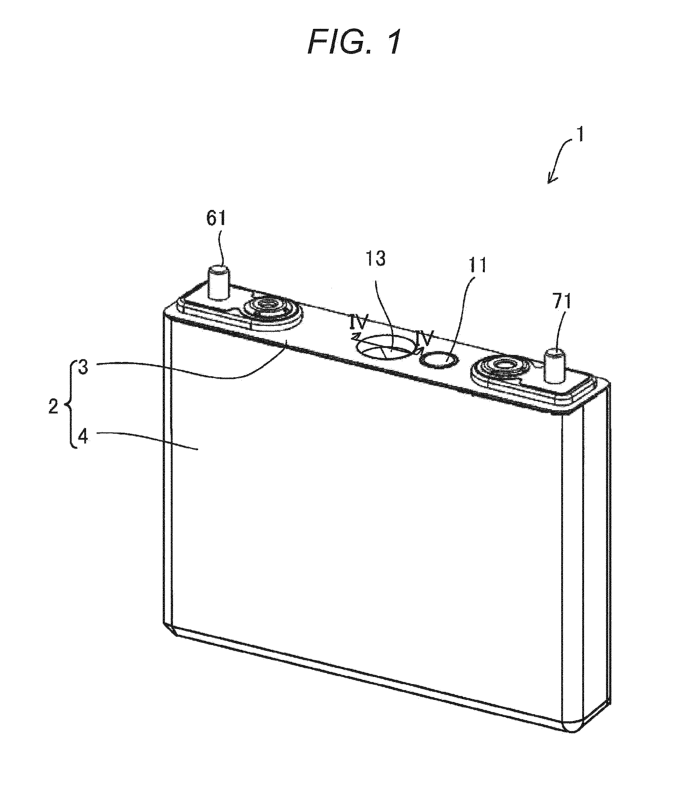

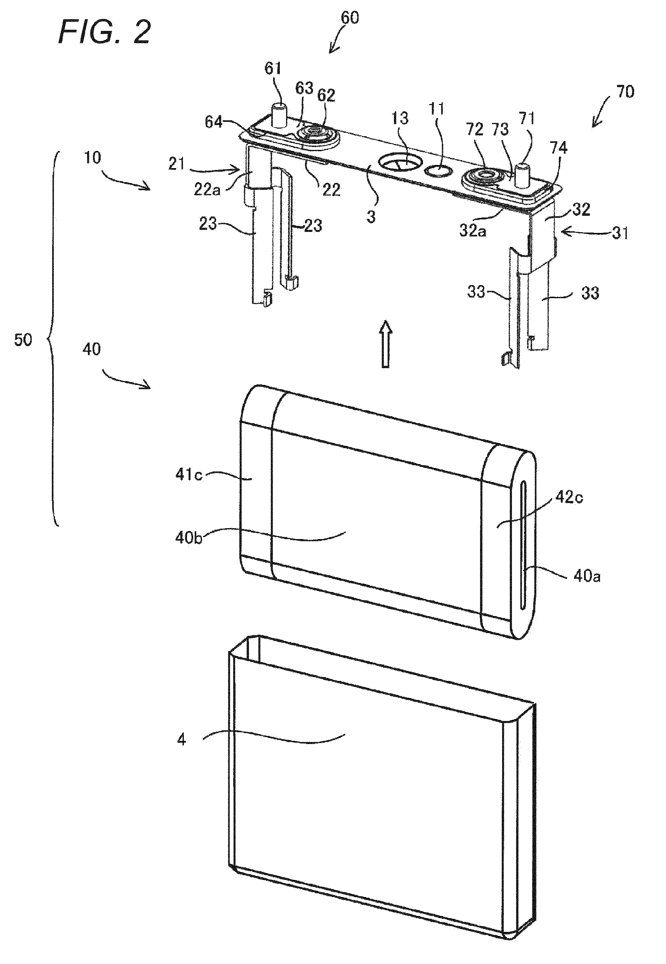

FIG. 1 is a perspective view illustrating an external appearance of an embodiment of a prismatic storage battery according to the present invention. FIG. 2 is an exploded perspective view illustrating a prismatic storage battery as illustrated in FIG. 1.

The prismatic storage battery 1 has an electrode group (electric power generation element) 40 which is accommodated in a thin-type substantially rectangular parallelepiped-shaped battery container 2 constituted by a battery lid (lid member) 3 and a battery case 4, and is configured such that nonaqueous electrolyte, not shown, is injected therein. The battery lid 3 and the battery case 4 are formed with, for example, aluminum, iron, and stainless.

The battery lid 3 is integrally assembled with a positive current collector 21, a negative current collector 31, and the like, and is configured as a battery lid unit 10. Each of the positive current collector 21 and the negative current collector 31 of the battery lid unit 10 is joined with positive metal foil or negative collector foil of the electrode group 40 by, for example, ultrasonic welding to make a battery lid/electric power generation unit 50, and is accommodated through an opening portion at an upper end portion of the battery case 4.

FIG. 2 indicates that the battery lid/electric power generation unit 50 is structured to be directly accommodated in the battery case 4. Alternatively, the battery lid/electric power generation unit 50 may be structured such that the battery lid/electric power generation unit 50 is once accommodated into an insulating pouch which is of the same shape as the battery case 4 but of which size is slightly smaller than the battery case 4, and then, the battery lid/electric power generation unit 50 accommodated in the insulated pouch is accommodated in the battery case 4.

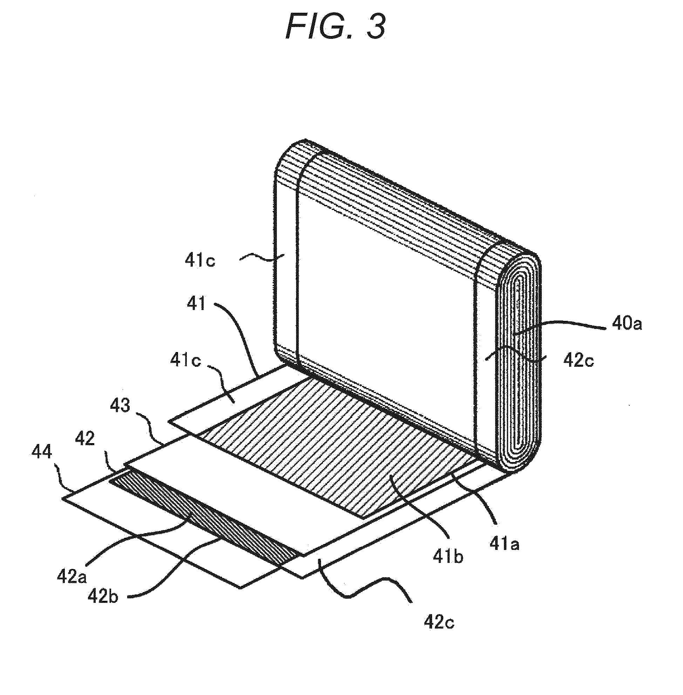

FIG. 3 is an external appearance perspective view illustrating a state where the wind-terminated side of the electrode group 40 is extracted.

The electrode group 40 is formed by winding the positive electrode 41 and the negative electrode 42 around an axial shaft, not shown, in a flat manner with first and second separators 43, 44 interposed therebetween. Reference symbol 40a denotes a hollow portion having a width equivalent to the thickness of the axial shaft of the electrode group 40. Reference symbol 40b (see FIG. 2) denotes a wide surface.

The positive electrode 41 is made by forming, for example, positive active material mix layers 41b on both of the front and back surfaces of the positive metal foil 41a made of aluminum foil and the like. The positive active material mix layer 41b is formed by coating the positive metal foil 41a with positive active material mix so as to form a positive active material mix non-treated portion 41c where the positive metal foil 41a is exposed at one side edge.

The negative electrode 42 is made by coating, for example, the both of the front and back surfaces of the negative metal foil 42a made of copper foil and the like with the negative active material mix layer 42b. The negative active material mix layer 42b is formed by coating the negative metal foil 42a with positive active material mix so as to form the negative active material mix non-treated portion 42c where the negative metal foil 42a is exposed, at the other side edge which is a side edge opposite to the side edge where the positive active material mix non-treated portion 41c is arranged.

The positive active material mix is made by adding 10 pts. wt. of flaky graphite serving as conductive material and 10 pts. wt. of PVDF serving as binding agent to 100 pts. wt. of lithium manganate (chemical formula LiMn₂O₄) serving as cathode active material, adding NMP as dispersion solvent thereto, and maxing them. This positive active material mix is applied to both surfaces of the aluminum foil having a thickness 20 µm while remaining the positive active material mix non-treated portion 41c. Thereafter, it is dried, pressed, and cut, and the positive electrode 41 having a thickness (the total thickness of both of the front and back surfaces of the aluminum foil) 90 µm of the positive active material mix layer 41b, which does not include the aluminum foil, is obtained.

The negative active material mix is made by adding 10 pts. wt. of polyvinylidene fluoride (hereinafter referred to as PVDF) serving as binding agent to 100 pts. wt. of Amorphous carbon powder serving as negative active material, adding N-methylpyrrolidone (hereinafter referred to as NMP) serving as dispersion solvent, and mixing them. This negative active material mix is coated to both surfaces of the copper foil having a thickness 10µm while remaining the negative active material mix non-treated portion 42c. Thereafter, it is dried, pressed, and cut, and the negative electrode 42 having a thickness (the total thickness of both of the front and back surfaces of the copper foil) 70 µm of the negative active material mix layer 42b, which does not include the copper foil, is obtained.

The electrode group 40 is formed as follows. Between the first, second separators 43, 44 of which end portions are welded to the axial shaft, not shown, each of the negative electrode 42 and the positive electrode 41 are wound in such arrangement that the winding start side end portion of the negative electrode 42 is located at the side inner than the winding start side end portion of the positive electrode 41. In this case, the positive active material mix non-treated portion 41c and the negative active material mix non-treated portion 42c are arranged at side edges facing each other in the width direction (direction perpendicular to the winding direction). The width of the negative active material mix layer 42b, that is, the length in the direction perpendicular to the winding direction, is formed to be wider than the width of the positive active material mix layer 41b. The width of the first separator 43 is a size such that the positive active material mix non-treated portion 41c of the positive electrode 41 is exposed to the outside at one side edge side. The width of the second separator 44 is a size such that the negative active material mix non-treated portion 42c of the negative electrode 42 is exposed to the outside at the other side edge side.

At the winding start side of the electrode group 40, that is, axial shaft side, a hollow portion 40a (see FIGS. 2, 3) is formed. At the winding-terminated side of the electrode group 40, the second separator 44 is wound at the outermost periphery, and the negative electrode 42 is wound at the inner periphery thereof. Therefore, the positive active material mix layer 41b is covered with the negative active material mix layer 42b throughout the entire length and the entire width from the winding start side to the winding-terminated side.

As described above, the positive electrode 41 of the electrode group 40 is such that the positive active material mix non-treated portion 41c of the positive metal foil 41a is exposed to the outside, and the negative electrode 42 of the electrode group 40 is such that the negative active material mix non-treated portion 42c of the negative metal foil 42a is exposed to the outside.

The battery lid 3 is provided with a liquid injection port 11 for injecting nonaqueous electrolyte. The battery lid 3 is provided with a safety valve 13 for releasing the pressure when the internal pressure increases to be more than a reference value due to overcharge and the like. The detailed structure of the battery lid 3 will be explained later.

The nonaqueous electrolyte may be a solution made by dissolving hexafluorophosphate lithium (LiPF₆) with density of 1 mol/liter in a mixed solution in which ethylene carbonate and dimethyl carbonate are mixed with a volume ratio of 1:2.

After the electrolyte is injected, a lectrolyte filling plug (not shown) is engaged in the liquid injection port 11, and the liquid injection port 11 is sealed by laser welding.

The battery lid 3 is joined with the battery case 4 by laser welding and is sealed.

As illustrated in FIG. 2, the battery lid unit 10 includes a battery lid 3, a positive side terminal configuration unit 60, and a negative side terminal configuration unit 70.

The positive side terminal configuration unit 60 includes an external positive terminal 61, a positive connection terminal 62, a positive terminal plate 63, an insulating plate 64, and a positive current collector 21.

The external positive terminal 61, the positive terminal plate 63, the positive connection terminal 62, and the positive current collector 21 are integrally attached to the battery lid 3.

Although not shown, the lid 3, the insulating plate 64, and the positive terminal plate 63 are formed with penetration holes through which the positive connection terminal 62 is inserted. In addition, the positive terminal plate 63 is formed with a penetration hole through which the external positive terminal 61 is inserted.

The positive side terminal configuration unit 60 is made as follows.

In advance, the positive current collector 21 is crimped on the positive connection terminal 62. The insulating plate 64 positioned and arranged in the penetration hole of the battery lid 3, and the penetration hole provided in the battery lid 3 and the penetration hole provided in the insulating plate 64 are positioned and arranged.

Subsequently, the external positive terminal 61 is fittedly inserted into the penetration hole provided in the positive terminal plate 63, and fixed to the insulating plate 64. Subsequently, the positive connection terminal 62 on which the positive current collector 21 is crimped is inserted into the penetration hole of the insulating plate 64 from the back side of the battery lid 3. The end side of the positive connection terminal 62 has a cylindrical shape that is slightly smaller than the penetration hole of the positive terminal plate 63, and by crimping the end portion of the positive connection terminal 62, the positive side terminal configuration unit 60 is integrally assembled onto the battery lid 3.

In this state, the positive current collector 21, the positive connection terminal 62, the positive terminal plate 63, and the external positive terminal 61 are electrically connected. The positive current collector 21, the positive connection terminal 62, the positive terminal plate 63, and the external positive terminal 61 are insulated from the battery lid 3 by the insulating plate 64.

The negative side terminal configuration unit 70 includes an external negative terminal 71, a negative connection terminal 72, a negative terminal plate 73, an insulating plate 74, and a negative current collector 31.

The negative side terminal configuration unit 70 has the same structure as the positive side terminal configuration unit 60, and the external negative terminal 71, the negative terminal plate 73, the negative connection terminal 72, and the negative current collector 31 are integrally assembled with the battery lid 3.

In this state, the negative current collector 31, the negative connection terminal 72, the negative terminal plate 73, and the external negative terminal 71 are electrically connected. The negative current collector 31, the negative connection terminal 72, the negative terminal plate 73, and the external negative terminal 71 are insulated from the battery lid 3 by the insulating plate 74.

By joining the positive/negative current collectors 21, 31 to the electrode group 40, the prismatic storage battery 1 is can be charged or discharged by an external electronic device connected to the external positive terminal 61 and the external negative terminal 71.

The positive current collector 21 is formed with aluminum. The positive current collector 21 has a support portion 22a where the main portion 22 attached to the battery lid 3 is bent substantially 90 degrees. The bent support portion 22a is branched into two parts at the end portion, thus forming a pair of flat-shaped joint pieces 23. Each joint piece 23 is ultrasonic-welded to the electrode group 40. Each joint piece 23 is bent with an angle inclined with respect to the support portion 22a. The inclination directions of the pair of joint pieces 23 are opposite to each other, but are of the same angle with respect to the central surface to be in line symmetry. The pair of joint pieces 23 are joined to the positive active material mix non-treated portion 41c while the electrode group 40 is opened in an inverted V shape at the center of the hollow portion 40a.

The negative current collector 31 is formed with copper, but has the same structure as the positive current collector 21.

The negative current collector 31 has a support portion 32a where the main portion 32 attached to the battery lid 3 is bent substantially 90 degrees. The bent support portion 32a is branched into two parts at the end portion, thus forming a pair of flat-shaped joint pieces 33. Each joint piece 33 is ultrasonic-welded to the electrode group 40. The inclination directions of the pair of joint pieces 33 are opposite to each other, but are of the same angle with respect to the central surface to be in line symmetry. The pair of joint pieces 23 are joined to the positive active material mix non-treated portion 41c by ultrasonic welding while the electrode group 40 is opened in an inverted V shape at the center of the hollow portion 40a.

### [Structure of safety valve]

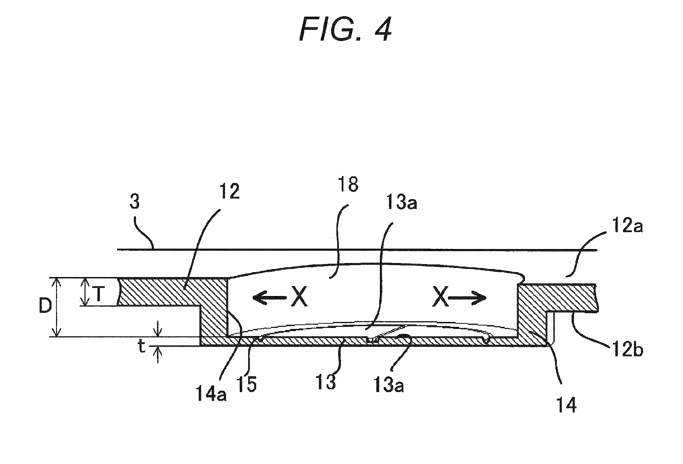

FIG. 4 is an enlarged perspective view taken along line IV-IV of the battery lid 3 as illustrated in FIG. 1

The safety valve-integrated battery lid 3 is made as follows. An aluminum flat plate is pressed to form a depressed portion 18, and a thin film-like safety valve 13 is formed on a bottom portion of the depressed portion 18. More specifically, the battery lid 3 is configured as a member integrally including a base portion 12 forming the upper portion of the battery lid 3, a peripheral wall portion 14 provided in contact with the base portion 12, and the thin film-like safety valve 13 provided in contact with the peripheral wall portion 14. In this case, a space formed by the inner peripheral surface 14a of the peripheral wall portion 14 and the upper surface 13a of the safety valve 13 is the depressed portion 18. More specifically, the depth D of the depressed portion 18 is a size from the upper surface 12a of the base portion 12 to the upper surface 13a of the safety valve 13. The safety valve 13 is entirely formed in a flat-shape.

The depth D of the depressed portion 18 is formed to be larger than the thickness (plate thickness) T of the base portion 12. More specifically, the upper surface 13a of the safety valve 13 is formed at a position lower than the lower surface 12b of the base portion 12. The safety valve 13 has a substantially circular shape in a plane view.

The thickness t of the safety valve 13 is formed to be thinner than the thickness (plate thickness) T of the base portion 12, and the upper surface 13a of the safety valve 13 is formed with a groove 15 that breaks and opens with a gas pressure generated inside of the storage battery 1.

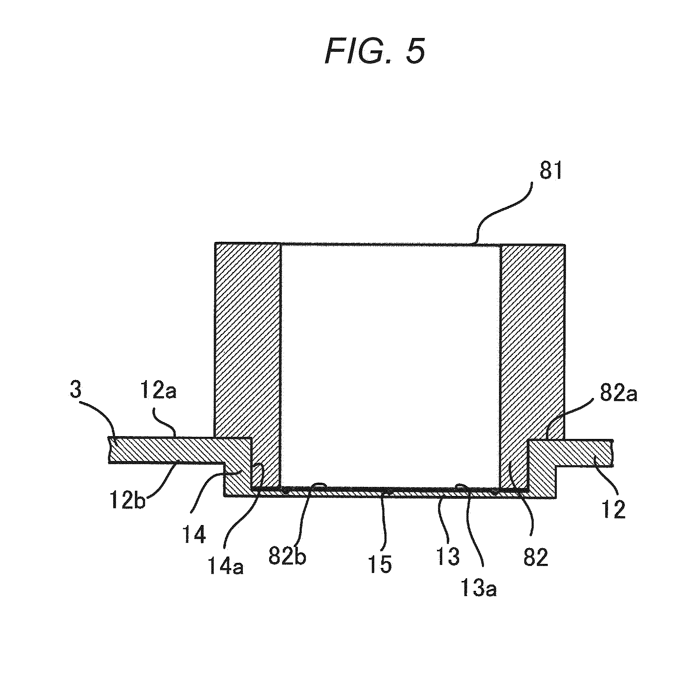

FIG. 5 illustrates a cross sectional view of a structure that a connection tube 81 connected to the discharge duct for discharging gas is attached to the upper portion of the safety valve 13 of the battery lid 3.

The connection tube 81 is a tube-shaped member having a hollow portion, and at the end side, it is formed with a connection end portion 82 having a smaller diameter. The connection end portion 82 is fixed to the inner peripheral surface of the peripheral wall portion 14 of the battery lid 3 by press fit and the like.

The height of the connection end portion 82 is defined so that space is provided between the end surface 82b of the connection end portion 82 and the upper surface 13a of the safety valve 13 while the step portion 82a is in contact with the upper surface 12a of the base portion 12.

The connection tube 81 is attached by pressing the connection tube 81 toward the safety valve 13 until the connection tube 81 is press fitted to the inner peripheral surface of the peripheral wall portion 14 and the step portion 82a is into contact with the upper surface 12a of the base portion 12.

In this embodiment, as described above, the flat-shaped safety valve 13 is provided at the bottom portion of the depressed portion 18, that is, at the lower portion of the inner peripheral surface 14a of the peripheral wall portion 14 for forming the depressed portion 18. The upper surface 13a of the safety valve 13 is formed at a position lower than the lower surface 12b of the base portion 12. As described above, the height of the connection tube 81 press fitted to the inner peripheral surface 14a of the peripheral wall portion 14 is a size more than the thickness of the base portion 12, and the length in which the connection tube 81 is in contact with the inner peripheral surface 14a of the peripheral wall portion 14 is a size more than the thickness of the base portion 12.

When external force parallel to the upper surface 13a of the battery lid 3 is exerted from the side to the connection tube 81, the external force is transmitted as pressing force X to the inner peripheral surface 14a of the peripheral wall portion 14 from the connection end portion 82 as illustrated in FIG. 4. The entire region in the depth direction of the inner peripheral surface 14a of the peripheral wall portion 14 is in contact with the connection end portion 82, and therefore, the pressing force X is supported by the entire thickness (plate thickness) T of the base portion 12. If the depth D of the depressed portion 18 of the safety valve 13 is smaller than the thickness (plate thickness) T of the base portion 12 of the battery lid 3, the pressing force X is supported by the inner surface of the peripheral wall portion 14 smaller than the thickness (plate thickness) T. In such state, the supporting force of the pressing force X becomes small, and, for example, defects such as damage of the peripheral wall portion 14 is likely to occur.

In contrast, in the above embodiment, the pressing force X is supported by the inner peripheral surface 14a of the inner wall portion 14 corresponding to the entire surface of the thickness (plate thickness) T of the base portion 12. Therefore, the supporting force by the peripheral wall portion 14 against the pressing force X can be increased.

As described above, the height of the connection end portion 82 and the depth D of the depressed portion 18, that is, the size from the upper surface 12a of the base portion 12 to the upper surface 13a of the safety valve 13 are defined to be more than the thickness (plate thickness) T of the base portion 12, whereby a sufficient rigidity for attaching the connection tube 81 can be ensured.

### [Method for forming safety valve]

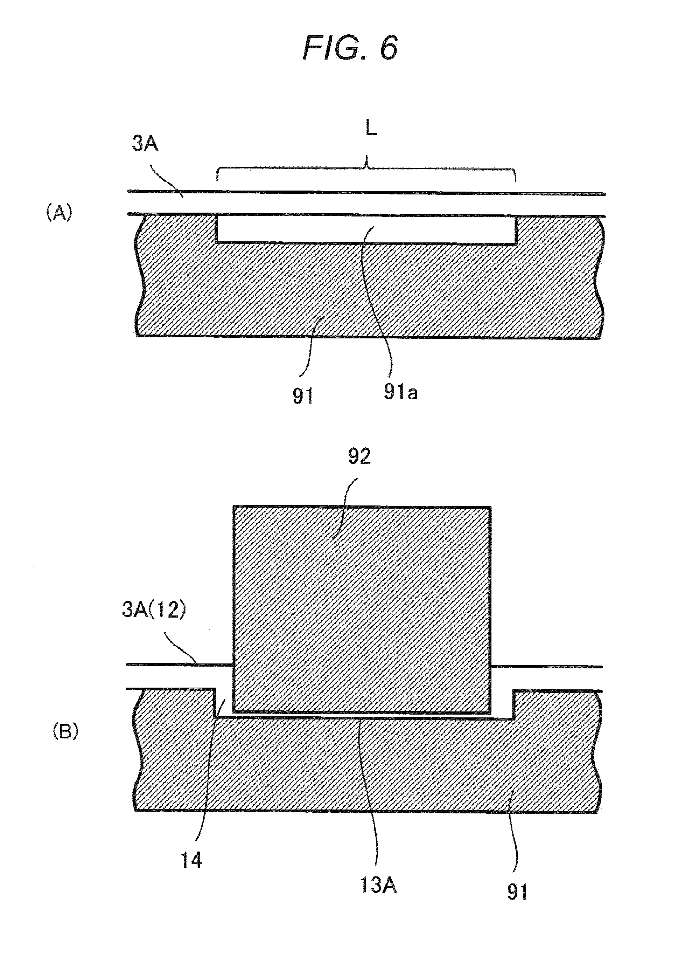

FIGS. 6(a) and 6(b) are cross sectional views for explaining the method for forming the safety valve 13.

First, as illustrated in FIG. 6(a), a lower mold 91 is prepared. The lower mold 91 has a cylindrical-shaped hollow portion 91a having the same diameter as that of the external peripheral surface of the peripheral wall portion 14.

Then, a battery lid material 3A made of, for example, aluminum metal plate is placed on the lower mold 91. The plate thickness of the battery lid material 3A is, for example, about 1.5 mm.

The height of the step of the hollow portion 91a of the lower mold 91 is preferably equal to or more than 1.6 mm and up to about twice the plate thickness of the battery lid material 3A. More specifically, the height of the step of the hollow portion 91a of the lower mold 91 is preferably up to about 3.0 mm.

Subsequently, the axial shaft is moved to the hollow portion 91a, and a portion of the battery lid material 3A corresponding to the hollow portion 91a is pressed by an upper mold 92 having a diameter smaller than the diameter of the hollow portion 91a. With this press work, the peripheral wall portion 14 and a thin portion 13A which is thinner than the plate thickness of the battery lid material 3A

In this case, a volume V for a length L corresponding to the hollow portion 91a of the battery lid material 3A before the press work is equal to a volume V of summation of the volume of the peripheral wall portion 14 and the volume of the thin portion 13A after the press work.

The thickness of the thin portion 13A is, for example, about 0.1 mm to 0.3 mm.

Then, although not shown, by pressing and the like, the safety valve 13 is formed by forming the groove 15 in the thin portion 13A. The depth of the groove 15 is, for example, about 0.05 mm.

Thereafter, the liquid injection port 11 and the like are formed in the battery lid material 3A, whereby the battery lid 3 is made. The liquid injection port 11 may be formed before the safety valve 13 is formed.

### [Effects of first embodiment]

According to the embodiment of the present invention described above, the following effects are achieved.
(1) The upper surface 13a of the safety valve 13 is formed at a position lower than the lower surface 12b of the base portion 12. In other words, the depth D of the depressed portion 18 is formed to be larger than the thickness (plate thickness) T of the base portion 12. Therefore, in the structure in which the connection tube 81 is attached to the peripheral wall portion 14 provided in contact with the base portion 12, high degree of attachment rigidity can be obtained.
(2) The connection tube 81 of the duct can be attached by pressing fitting to the inner peripheral surface 14a of the peripheral wall portion 14, and this structure simplifies the attachment structure, and can increases the sealing property of the duct.
(3) The sealing property of the battery lid 3 and the connection end portion 82 of the connection tube 81 can be enhanced by increasing the height of the connection end portion 82 and the height of the peripheral wall portion 14, but even though the height of the peripheral wall portion 14 is increased, the rigidity of the peripheral wall portion 14 against press fitting of the connection end portion 82 is maintained substantially at the same level. Therefore, by changing the height of the peripheral wall portion 14, appropriate sealing property can be ensured easily.
(4) As illustrated in FIG. 5, the space is provided between the end surface 82b of the connection end portion 82 and the upper surface 13a of the safety valve 13, and therefore, the connection end portion 82 of the connection tube 81 does not come into contact with the safety valve 13 which is the thin portion. Therefore, this can prevent the safety valve 13 from being damaged when the connection end portion 82 comes into contact therewith.
(5) The safety valve 13 is formed at a position lower than the upper surface 12a of the base portion 12 of the battery lid 3, and therefore, the deformation of the safety valve 13 can be reduced when the battery lid 3 is deformed.

### (Second embodiment)

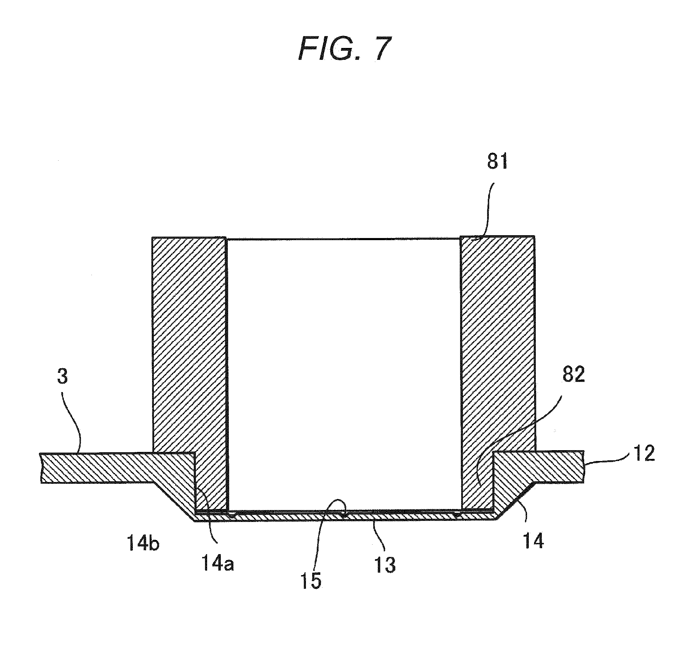

FIG. 7 is a cross sectional view illustrating an attachment structure of a battery lid and a duct according to the second embodiment of the present invention.

The second embodiment is different from the first embodiment in that the external peripheral surface 14b of the peripheral wall portion 14 is an inclination surface.

The external peripheral surface 14b of the peripheral wall portion 14 is formed as an inclination surface of which diameter gradually increases from the connection portion with the safety valve 13 to the connection portion with the base portion 12. The inner peripheral surface 14a of the peripheral wall portion 14 is substantially vertical, and therefore, the thickness of the peripheral wall portion 14 gradually increases from the side of the safety valve 13 to the side of the base portion 12. The connection portion with the lower surface 12b of the base portion 12 is formed to be thicker than the thickness of the base portion 12.

As described above, the thickness of the peripheral wall portion 14 is thicker than the thickness of the base portion 12 at the connection portion with the base portion 12, and the peripheral wall portion 14 is an inclination surface where the diameter of the external peripheral surface 14b of the peripheral wall portion 14 gradually decreases toward the side of the safety valve 13, so that the rigidity of the peripheral wall portion 14 against the external force is improved, and the stress exerted on the peripheral wall portion 14 can be dispersed.

In the second embodiment, the same effects as those of the first embodiment are also achieved.

The structure other than the above is the same as that of the first embodiment, and the same reference numerals are attached to the corresponding members, and description thereabout is omitted.

### (Third embodiment)

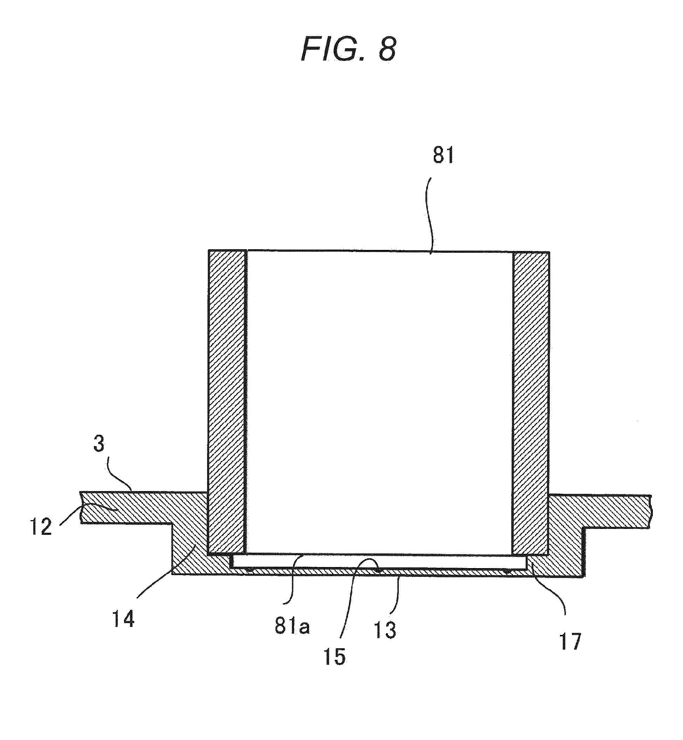

FIG. 8 is a cross sectional view illustrating an attachment structure of a battery lid and a duct according to the third embodiment of the present invention.

The third embodiment is different from the first embodiment in that the connection tube 81 does not have the connection end portion 82 formed therewith, and a connection tube receiving portion (step portion) 17 is formed between the peripheral wall portion 14 and the periphery of the safety valve 13.

The connection tube receiving portion 17 is formed as a step portion of the inner peripheral surface bottom portion of the peripheral wall portion 14. The end surface 81a of the connection tube 81 is in contact with the upper surface of the connection tube receiving portion 17.

In the third embodiment, when the connection tube 81 is attached, the connection tube 81 may be press fitted to the inner peripheral surface of the peripheral wall portion 14, and the connection tube 81 may be pressed to the side of the safety valve 13 until the end surface 81a is in contact with the upper surface of the connection tube receiving portion 17.

Therefore, the connection tube 81 need not be formed with the connection end portion 82 having a smaller diameter, and this can simplify the structure of the connection tube 81.

In the third embodiment, the same effects as those of the first embodiment are also achieved.

The structure other than the above is the same as that of the first embodiment, and the same reference numerals are attached to the corresponding members, and description thereabout is omitted.

Further, although not shown, the second embodiment and the third embodiment may be combined to make such structure that the external peripheral surface 14b of the peripheral wall portion 14 is an inclination surface in which the external shape thereof gradually decreases toward the side of the safety valve 13, and a step portion may be provided on the inner peripheral surface of the peripheral wall portion 14 bottom portion.

### (Fourth embodiment)

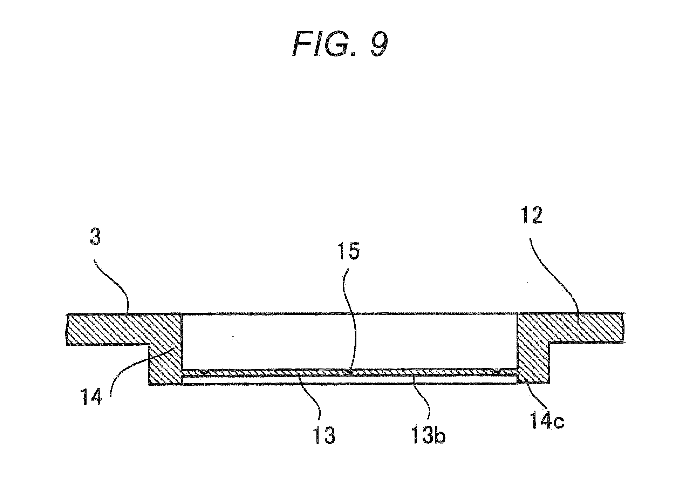

FIG. 9 is a cross sectional view illustrating an attachment structure of a battery lid and a duct according to the fourth embodiment of the present invention.

The fourth embodiment is different from the first embodiment in that the lower end portion of the peripheral wall portion 14 is formed to protrude from the lower surface 13b of the safety valve 13.

The peripheral wall portion 14 includes the lower end portion 14c protruding from the lower surface 13b of the safety valve 13 to the side opposite to the base portion 12. On the contrary, the safety valve 13 is depressed from the lower end portion 14c of the peripheral wall portion 14. Therefore, for example, the safety valve 13 can be prevented from being damaged when, during assembly steps and conveying, the battery lids 3 may come into contact with each other, or the assembly jig may collide with the safety valve 13.

In the fourth embodiment, the same effects as those of the first embodiment are also achieved.

The structure other than the above is the same as that of the first embodiment, and the same reference numerals are attached to the corresponding members, and description thereabout is omitted.

### (Fifth embodiment)

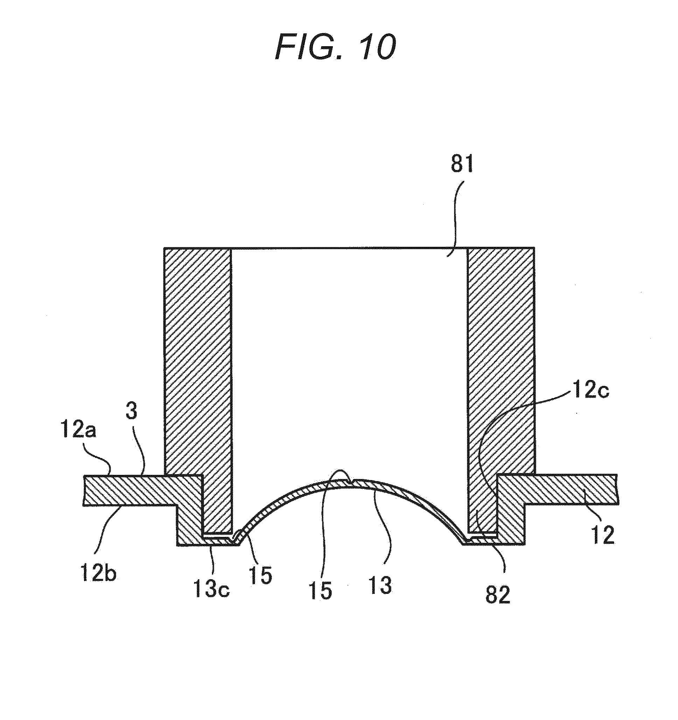

FIG. 10 is a cross sectional view illustrating an attachment structure of a battery lid and a duct according to the fifth embodiment of the present invention.

In the first to the fourth embodiments, the safety valve 13 is substantially flat, and the upper surface 13a of the safety valve 13 is located below the lower surface 12b of the base portion 12.

However, the safety valve 13 may not be flat, and the entire upper surface 13a of the safety valve 13 may not be located below the lower surface 12b of the base portion 12.

FIG. 10 illustrates an example of such embodiment.

In the fifth embodiment illustrated in FIG. 10, the safety valve 13 has a flat peripheral edge portion 13c at the peripheral wall portion 14, and a central portion which is the inner peripheral side than the peripheral edge portion 13c is formed to be bent in a dome shape. More specifically, the safety valve 13 is formed at the highest position at substantially central portion. The portion of the highest position of the safety valve 13 is located in a range of the upper surface 12a and the lower surface 12b of the base portion 12. In other words, the portion of the highest position of the safety valve 13 is located in a range of thickness of the base portion 12. At the upper surface side of the safety valve 13, a groove 15 for breaking and opening is formed at the base portion and the central portion just like the first embodiment.

In the fifth embodiment, the flat-shaped peripheral edge portion 13c provided in contact with the peripheral wall portion 14 is located below the lower surface 12b of the base portion 12, and the width of the peripheral edge portion 13c is formed to be slightly larger than the material thickness of the connection end portion 82 of the connection tube 81.

As illustrated in FIG. 10, the connection end portion 82 of the connection tube 81 is arranged within the region of the flat-shaped peripheral edge portion 13c of the safety valve 13. Therefore, the connection end portion 82 can be arranged within the region of the peripheral edge portion 13c while the lower end surface of the connection end portion 82 of the connection tube 81 is not in contact wit the upper surface 13a of the safety valve 13

In the fifth embodiment, the connection end portion 82 can be held by the peripheral side surface 12c over the entire thickness of the base portion 12, and like the first to fourth embodiments, this can be made into the support structure for the connection tube 81 with a high degree of rigidity.

When the safety valve 13 is not in the flat shape but is bent in the dome shape, the amount of change at the central side of the safety valve 13 and the amount of change at the peripheral edge portion side of the safety valve 13 are uniformized, and therefore, this can reduce variation of the gas pressure when the safety valve 13 breaks and opens, which improves the reliability.

In the fifth embodiment, the same effects as those of the first to the fourth embodiments are achieved with regard to the other features.

The structure other than the above is the same as that of the first embodiment, and the same reference numerals are attached to the corresponding members, and description thereabout is omitted.

Although not shown, the flat safety valve 13 in the second to the fourth embodiments may be replaced with the bent safety valve 13 of the fifth embodiment.

In each embodiment explained above, for example, the structure is shown in which the connection tube 81 is attached to the battery lid 3 by press fitting and the like. Alternatively, the connection tube 81 may be attached to the battery lid 3 by adhering, welding, or the like. A seal member may be interposed between the connection tube 81 and the peripheral side surface 12c of the battery lid 3.

For example, the safety valve 13 is in the circular shape in the plane view. Alternatively, the shape of the safety valve 13 may be changed and applied as necessary, for example, an elliptic shape, a polygonal shape, and the like. The groove 15 for breaking and opening may be formed at the side of the lower surface 13b of the safety valve 13.

In the above embodiments, the lithium-ion secondary battery is used in the explanation. However, the present invention can also be applied to prismatic storage batteries using water-soluble electrolytes such as a nickel metal hydride battery, a nickel-cadmium battery, or a lead storage battery.

The prismatic storage battery according to the present invention can be modified and applied in various manners within the scope of the gist of the invention. In short, the connection joint portion between the safety valve 13 and the peripheral wall portion 14 may be at the lower side of the lower surface 12b of the battery lid 3.

The contents disclosed in the following priority basis application are incorporated herein by reference.

Japanese Patent Application No. 2011-122732 (filed on May 23, 2011)

## Claims

1. A prismatic storage battery comprising:
an electric power generation element formed by laminating a positive electrode and a negative electrode with a separator interposed therebetween; and
a battery container in which the electric power generation element is accommodated and in which an electrolyte is injected, wherein the battery container is formed as a sealed structure with a battery case and a lid member,
the lid member is integrally formed with a base portion having a predetermined thickness having an upper surface and a lower surface, a peripheral wall portion forming a depressed portion depressed from the upper surface of the base portion, and a safety valve having a peripheral edge portion provided in contact with the peripheral wall portion, wherein at least an upper surface of the peripheral edge portion of the safety valve is located below the lower surface of the base portion.

2. The prismatic storage battery according to claim 1, wherein the safety valve is formed substantially flatly, and the entire upper surface is located below the lower surface of the base portion.

3. The prismatic storage battery according to claim 1, wherein the safety valve has a bent portion protruding in a dome shape protruding from the peripheral edge portion to the base portion side, and the upper surface of a central portion of the bent portion is located above the lower surface of the base portion.

4. The prismatic storage battery according to claim 3, wherein the peripheral edge portion of the safety valve is formed in a flat shape, and the bent portion is formed inside of the peripheral edge portion.

5. The prismatic storage battery according to claim 1, wherein a thickness of the safety valve is formed thinner than the thickness of the base portion and the peripheral wall portion.

6. The prismatic storage battery according to claim 1, wherein a groove being an opening/breaking portion is formed in the safety valve.

7. The prismatic storage battery according to claim 1, wherein the peripheral wall portion is formed in an inclined form of which thickness gradually increases from the peripheral edge portion of the safety valve to the base portion.

8. The prismatic storage battery according to claim 1, wherein a step portion thicker than the thickness of the safety valve is formed between the peripheral wall portion and surrounding of the safety valve.

9. The prismatic storage battery according to claim 1, wherein the peripheral wall portion includes a lower end portion protruding from the lower surface of the peripheral edge portion of the safety valve to a lower side.

10. The prismatic storage battery according to any one of claims 1 to 9, wherein the safety valve is in a circular shape in a plane view.

## Amended claims

### Amended claims under Art. 19.1 PCT

**1.** (Amended)
A prismatic storage battery comprising:
an electric power generation element formed by laminating a positive electrode and a negative electrode with a separator interposed therebetween; and
a battery container in which the electric power generation element is accommodated and in which an electrolyte is injected, wherein the battery container is formed as a sealed structure with a battery case and a lid member,
the lid member is integrally formed with a base portion having a predetermined thickness having an upper surface and a lower surface, a peripheral wall portion forming a depressed portion depressed from the upper surface of the base portion, and a safety valve having a peripheral edge portion provided in contact with a bottom portion of the peripheral wall portion, wherein the bottom portion of the peripheral wall portion is protruding to an inner side of the battery container with respect to the lower surface of the base portion.

**2.** (Amended)
The prismatic storage battery according to claim 1, wherein the safety valve is formed substantially flatly, and the entire upper surface is located below the lower surface of the base portion.

**3.** The prismatic storage battery according to claim 1, wherein the safety valve has a bent portion protruding in a dome shape protruding from the peripheral edge portion to the base portion side, and the upper surface of a central portion of the bent portion is located above the lower surface of the base portion.

**4.** The prismatic storage battery according to claim 3, wherein the peripheral edge portion of the safety valve is formed in a flat shape, and the bent portion is formed inside of the peripheral edge portion.

**5.** The prismatic storage battery according to claim 1, wherein a thickness of the safety valve is formed thinner than the thickness of the base portion and the peripheral wall portion.

**6.** The prismatic storage battery according to claim 1, wherein a groove being an opening/breaking portion is formed in the safety valve.

**7.** The prismatic storage battery according to claim 1, wherein the peripheral wall portion is formed in an inclined form of which thickness gradually increases from the peripheral edge portion of the safety valve to the base portion.

**8.** (Deleted)

**9.** The prismatic storage battery according to claim 1, wherein the peripheral wall portion includes a lower end portion protruding from the lower surface of the peripheral edge portion of the safety valve to a lower side.

**10.** The prismatic storage battery according to any one of claims 1 to 9, wherein the safety valve is in a circular shape in a plane view.
